# EUROPEAN PATENT SPECIFICATION

(11) **EP 1 804 149 B1**
(45) Date of publication and mention of the grant of the patent: **18.05.2011**
(21) Application number: 05028548.5
(22) Date of filing: 28.12.2005
(51) Int. Cl.: G05D 1/02

(54) **Mobile robot**
Mobiler Roboter
Robot mobile

(43) Date of publication of application: 04.07.2007
(73) Proprietor: ABB Research Ltd., 8050 Zürich (CH)
(72) Inventor: Jensfelt, Patric, 111 37 Stockholm (SE); Iskov, Christensen Henrik, 192 53 Sollentuna (SE)
(74) Representative: Wihlsson, Joakim Per Magnus

(56) References cited:
- EP-A- 1 193 168
- EP-A- 1 541 295
- US-A- 5 363 305
- CANOU J ET AL: "A local map building process for a reactive navigation of a mobile robot" ROBOTICS AND AUTOMATION, 2004. PROCEEDINGS. ICRA '04. 2004 IEEE INTERNATIONAL CONFERENCE ON NEW ORLEANS, LA, USA APRIL 26-MAY 1, 2004, PISCATAWAY, NJ, USA,IEEE, US, vol. 5, 26 April 2004 (2004-04-26), pages 4839-4844, XP010768159 ISBN: 0-7803-8232-3

## Description

### Technical field

The present invention relates to a mobile robot arranged to operate in an environment and being arranged to create a map of the environment The present invention also relates to a method for creation of a map for a mobile robot.

### Description of the prior art

Many practical applications require a mobile robot to travel autonomously in an environment. This requires the mobile robot to have a map to follow. The map may be generated in advance and may be provided to the mobile robot when it is installed at an environment in which it is intended to operate. If the environment in which the mobile robot is to operate is large it is, however, very time consuming to generate the map.

In order to decrease the effort necessary to generate a map mobile robots have been designed to generate the map while the mobile robot travels autonomously through the environment in which it is to operate. Such an approach is described for example in "Automatic map acquisition for navigation in domestic environments. P. Althaus et al. in proc. ICRA 2003". In this publication a mobile robot is described which creates a topological map by autonomously following an operator., who indicates each new location (node) by sending signals to the mobile robot through a wirelessly connected laptop.

In "Interactive SLAM using Laser and Advanced Sonar, Albert Diosi et al. in proc. ICRA 2005" an alternative solution to interactive mapping is described. A map comprising local features is created when a mobile robot moves in an environment. The map is created based on measurements of the motion of the robot and the direction and distance to local features detected by the robot. Simultaneously, laser scans of the local environment are saved at regular intervals together with the position of the mobile robot in relation to the local features. When the mobile robot in a second run moves to an area it has already visited in a first run, the position measured by the mobile robot may be different from the real position due to errors in the movement detection of the robot. This leads to an error in the map over local features. By comparing a number of stored local features from the first run and their relative relationship with a number of stored local features from the second run and their relative relationship it is possible to determine whether they are the same local features or not. If they are the same local features the map may be corrected accordingly. An example of a case when this might occur is when the robot moves along a corridor and back along the same corridor. After correction of the map over local features a map based on the laser scans may be created wherein the separate laser scans may be aligned with each other. In the same paper it is also described that the system generates an occupancy grid map with segmentation information describing the extent of each region of interest.

However, in case that the robot for example is moving in an environment in which the same position may be reached in two different ways and the robot has to travel a long distance in these two ways, the error in position of the same local feature might be very large. In order to detect that an earlier detected local feature has been detected comparisons will have to be made in very large areas of the map. It may be impossible, or at least very hard, to detect that an earlier detected local feature has been detected. In case it is possible to detect that an earlier detected local feature has been detected, very large time consuming computations may be required.

### Summary of the invention

An object of the present invention is to provide a mobile robot which may create a map over the environment in which it is to operate and which at least alleviates the problems with the prior art robots described above.

Another object of the present invention is to provide a method for the creation of a map for a mobile robot, which method at least alleviates the problems of the prior art.

A basic idea of the invention is to arrange the robot so that it is possible to edit the map created by the robot during creation of the map.

A mobile robot according to the invention is defined in claim 1.

By having the mobile robot arranged so that the map may be edited in the installation mode the map may be created more efficiently than what would otherwise be the case.

The mobile robot may be arranged to store the representation of the at least one object around the mobile robot in a fixed system of coordinates.

The mobile robot may be arranged to store at least one of the representations of the at least one object around the mobile robot with data on the relation to an earlier stored represention of an object. This might be favorable in some cases as any adjustment of the representation of a certain object will lead to an automatic adjustment of the representations being related to that certain object. The choice of whether to store a representation with data on the relation to an earlier stored representation may be made for example by the operator.

The mobile robot may be arranged to store information on visited positions in relation to representations of detected objects. Also information on other positions such as positions for, e.g., charging stations may be stored in relation to representations of detected objects. Information on positions stored in relation to representations of detected objects will thus be updated simultaneously with the representations of detected objects.

The mobile robot may be arranged to adjust the representation of a detected object to an earlier stored representation of the object, when it returns to a previously visited position. In this way errors in the stored representations, which are due to imperfections in the means to detect movement, may be corrected. However, in case the association between a measured position and an earlier stored position is too difficult, as may be the case when the measured position of the detected object differs too much from the earlier stored position, it is necessary for the operator to instruct the mobile robot that it is the same object.

The editing means may be selected from the group comprising a keyboard, a mouse and a joystick. In addition to or instead of the keyboard, the mouse and the joystick the editing means may comprise any combination of a computer screen, a touch sensitive screen, a touchpad and a track ball. It is also possible to use any other input device known to men skilled in the art.

The output means may be a display arranged on the mobile robot. Alternatively, the output means may be an output to which an external terminal may be connected. Such an output to which an external terminal may be connected, may be wireless.

The mobile robot may be arranged to store a blueprint in the storage means and to output the blueprint simultaneously with the output of the map on the output means. This makes it easier for an operator to identify which objects are represented on the map and to edit the map accordingly.

The mobile robot may be arranged to scale the blueprint to fit the map. This largely increases the possibility to identify objects in the map.

The mobile robot may comprise wheels to make it mobile. There are, however, also other possibilities for realising the mobility of the mobile robot. The mobile robot may for example comprise caterpillars.

The means to detect the movement of the mobile robot is arranged to measure the movement of at least one of the wheels. This may be accomplished by, e.g. an odometer. An odometer may also be implemented on a mobile robot having tracks instead of wheels.

The means to detect movement of the mobile robot may be arranged to measure a change in distance between the mobile robot and an object. This may be the sole method of measuring the movement or may be combined with the above mentioned odometer. The means to detect movement may alternatively or additionaly comprise an inertial sensor.

The storage means may comprise an electronic memory. There are also other ways to provide the storage means, as for example by using a magnetic tape.

The detector means may be arranged to detect the distance and the direction to the object. This may be accomplished with a number of different embodiments. The detector means may comprise a radar and/or a laser based distance measuring device, It is also possible to use detectors based on ultra sound and infrared light in addition to or instead of the mentioned detector means.

The detector means may comprise a camera. In order to determine positions of objects from pictures taken with the camera it is necessary to combine a number of pictures as the distance from the camera to an object is not evident from the picture. It is of course possible to combine a camera with a laser based distance measuring device.

The mobile robot may be arranged to determine whether a detected object is static or moving. It is important for the robot to have knowledge on moving objects in order to avoid hitting them. It is, however, favourable if the mobile robot is arranged to store a representation of only static objects as the map otherwise is not valid for a longer time. It is difficult for the robot to determine which objects that are static at the time of detection but that are not intended to remain there, such as, e.g., loading pallets.

According to a second aspect of the present invention a method for building a map of an environment in which a mobile robot is to operate is defined in claim 20.

The method according to the second aspect of the invention has the same advantages as was described in relation to the mobile robot according to the first aspect of the present invention.

The outputting of the map may be performed by displaying the map on a display. The outputting of the map may alternatively be performed by outputting the map to an external terminal on which the map is displayed. The outputting may be performed using a wire or may be performed wirelessly. Methods for outputting information wirelessly are known to men skilled in the art.

In the following preferred embodiments of the invention will be described with reference to the drawings.

### Brief description of the drawings

Fig 1 shows a mobile robot according to an embodiment of the present invention.
Fig 2 shows a top view of an environment in which the mobile robot according to the invention is to operate.
Fig 3 shows a map over the environment stored in the storage means of the mobile robot.
Fig 4 shows a map over the environment stored in the storage means of the mobile robot together with a blueprint of the environment.

### Description of preferred embodiments

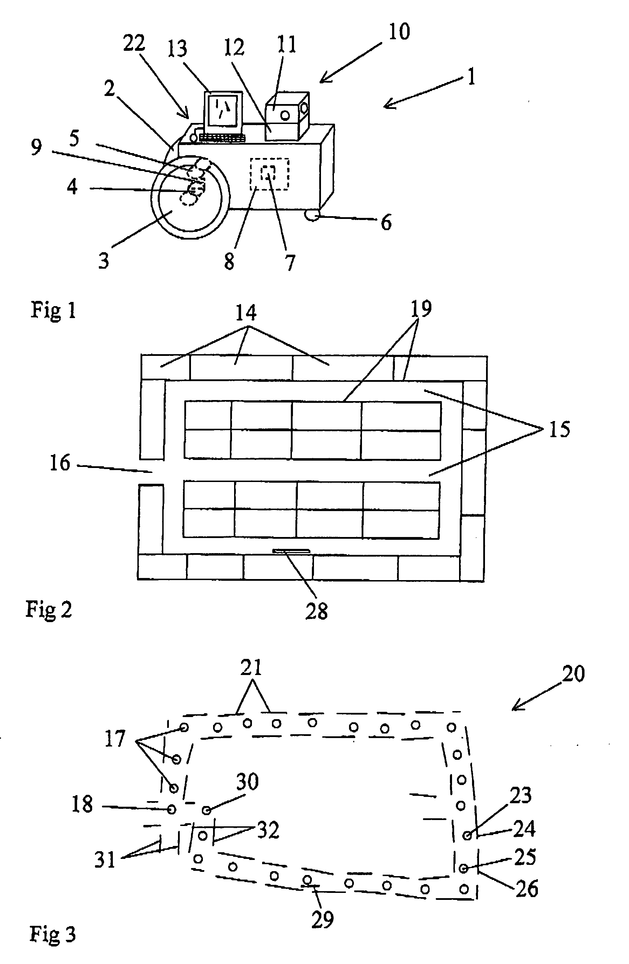

Fig 1 shows schematically a mobile robot 1 according to an embodiment of the present invention. The mobile robot 1 comprises two driving wheels 2, 3, which are individually driven by a respective motor 4, 5. By controlling the speed of rotation of the wheels 2, 3, the speed and the direction of motion of the mobile robot 1 may be controlled. The mobile robot 1 also comprises a castor 6 which is arranged to follow the motion of the mobile robot 1 driven by the driving wheels 2, 3. The mobile robot also comprises a storage means 7 in the form of a computer memory and a control means 8 in the form of a computer. The computer memory preferably forms a part of the computer which also is being used to control the motion of the mobile robot 1. It is of course also possible to have a number of computers handling different tasks in the mobile robot 1. The storage means 7 may, however, also form a separate component in the mobile robot 1.

The mobile robot also comprises means 9 to detect movement of the mobile robot 1 and detector means 10 to detect objects around the mobile robot 1. The detector means 10 comprises a laser transceiver 11 which is arranged to emit a laser beam in different directions and measure the distance to objects in the different directions. The detector means 10 may optionally also comprise a radar 12 which is also arranged to measure the distance to objects in different directions from the mobile robot 1. It is not necessary for the radar and laser transceiver to be arranged adjacent to each other. In the described embodiment the means 9 to detect movement comprises odometers arranged on the driving wheels 2, 3, but it is possible to detect the movement in other ways. The mobile robot also comprises output means 13 which in the described embodiment comprises a display on which the map stored in the storage means may be displayed. Further, the mobile robot 1 comprises editing means 22 in the form of a keyboard and a mouse.

The output means 13 may be realized in many other ways as, e.g., a wireless output through which the map wirelessly may be transferred to a display outside the mobile robot 1.

The mobile robot 1 has an installation mode in which the mobile robot 1 is arranged to move around in an environment in which it is to operate and to store representations of detected objects in the storage means based on the detected movement in order to create the map. The mobile robot 1 also has a maintenance mode in which the mobile robot 1 is arranged to move around in the environment using the map created in the installation mode.

During operation in the installation mode the mobile robot 1 moves around in the environment using the detector means 10 to navigate. During the movement the mobile robot 1 is followed by an operator, who may also guide the mobile robot 1. During the movement the robot detects objects in the environment using the detector means 10 and stores representations of the detected objects in the storage means 7. The position of the objects are stored in a fixed co-ordinate system while the position of the robot at a specific moment is saved in relation to the representation of an object. The position of the mobile robot 1 is calculated using the signal from the odometers on the driving wheels 2, 3, information from the detector means 10 and the map that has been created so far. During the movement the map is output on the display to be viewed by the operator following the mobile robot 1. At any time the operator may edit the map displayed on the display. After the map is created the installation mode is finished and the mobile robot 1 may enter the maintenance mode either autonomously or by command from the operator. In the maintenance mode the mobile robot 1 operates in the environment using the map created in the installation mode.

Operation of the mobile robot according to an embodiment of the present invention will now be described in larger detail with reference to Fig 2 and Fig 3. Fig 2 shows a top view of an environment in which the mobile robot 1 according to the invention is to operate. Fig 3 shows a map 20 over the environment stored in the storage means 7 of the mobile robot during movement of the mobile robot 1 in the environment when the mobile robot 1 is in the installation mode. The environment shown in Fig 2 comprises a number of rooms 14 connected by corridors 15. For clarity no doors between the corridors 15 and the rooms 14 are shown in Fig 2. The mobile robot 1 begins in the installation mode at the entrance 16. The mobile robot 1 then starts to move in the environment guided by an operator. During the movement in the environment the mobile robot 1 uses its means 9 to detect movement and saves the positions during movement as marks 17 in the storage means 7 beginning with the starting mark 18. During movement in the environment the mobile robot 1 uses the detector means 10 to detect the distance and direction to objects such as walls 19 in relation to the present position and stores a representation of the detected objects in a map in the storage means 7, starting with the starting representations 31. The representations 21 of the objects are stored in a fixed co-ordinate system while the marks 17 are stored in the storage means 7 with a relationship to the representations 21 of the objects.

During movement of the mobile robot in the environment the map is output on the output means 13 to be visible to the operator. Due to imperfections in the means 9 to detect movement and in the detector means 10, the map does not match the environment perfectly but may comprise errors, such as a straight corridor being represented as a bent corridor on the map. As can be seen from the marks 17 in Fig 3 the mobile robot 1 has been guided through the corridors back to where it started, where the mobile robot 1 stores the end representations 32. Thus, the end representations 32 should correspond to the starting representations 31. However, due to the mentioned imperfections in the means 9 to detect movement the end representations 32 are not placed in the same positions on the map as the starting representations 31. Furthermore, the starting mark 18 is not on the same position as the end mark 30.

As the map is output on the output means 13 when the mobile robot 1 is in the installation mode the operator can follow the creation of the map 20 and edit the map 20. Thus, the operator may edit the map in the storage means 7 with respect to the starting representations 32 and the end representations 31, by instructing the mobile robot that the end representations 32 are at the same position as the starting representations 31 . After receiving instructions with this information the mobile robot 1 may adjust the positions of the end representations 32 to the positions of the starting representations 31 as well as the related end marks 30. Furthermore, the robot may adjust all the other representations 21 on the map to be in accordance with this adjustment.

A similar case is when an occasional obstacle 28 is in the corridor 15. This will give rise to the obstacle representation 29 in the map. This obstacle representation may, however, be deleted by the operator during the installation mode.

During movement in the environment it may be possible for the mobile robot 1 in a present position to detect walls 19 of which representations 21 have already been saved in an earlier position of the mobile robot. When the mobile robot is in the position denoted 23 it saves the representation denoted 24. When the mobile robot 1 is in the position denoted 25 the mobile robot may detect the wall corresponding to the representation denoted 24 as well as the representation denoted 26. Thus, before saving the representation denoted 26 it may be adjusted using the information on the representation denoted 24.

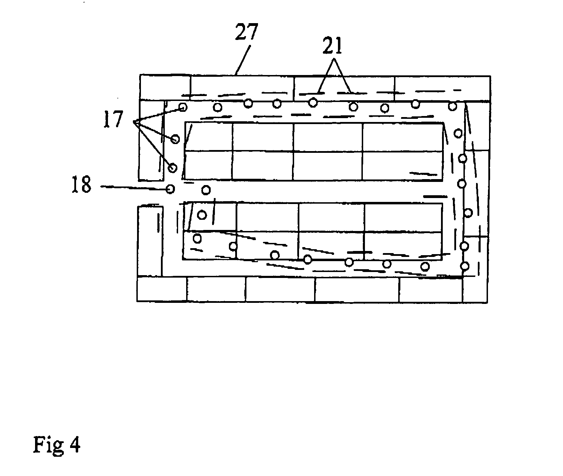

Fig 4 shows a map over the environment stored in the storage means of the mobile robot together with a blueprint 27 of the environment. Either the mobile robot 1 or the operator may use the blueprint to correct the map.

It is possible to arrange the robot to be movable by other means than using wheels. The movable robot may alternatively comprise caterpillars or legs or be arranged to hoover above the surface in the environment in which it is to operate. The robot may be arranged as a ball which is arranged to roll on the surface.

In addition to or instead of the keyboard and the mouse the editing means may comprise any combination of a joystick, a touch sensitive screen, a touchpad and a track ball. It is also possible to use any other input device known to men skilled in the art.

## Claims

1. A mobile robot (1) arranged to operate in an environment and comprising storage means (7) to store representations (21, 24, 26) of the environment, means (9) to detect movement of the mobile robot (1), detector means (10) to detect objects around the mobile robot (1), control means (8) to store a representation (21, 24, 26) of at least one detected object in a map (20) in the storage means (7), and output means (13) to output the map (20) from the storage means (7), wherein the mobile robot (1) in an installation mode is arranged to store representations of detected objects (19) in the storage means (7) based on the detected movement in order to create the map (20), and wherein the mobile robot (1) in a maintenance mode is arranged to move in the environment using the map (20) created in the installation mode, **characterized in that** the mobile robot (1) comprises editing means for editing based on a received instruction in the installation mode, the map (20) in the storage means (7) based on the map (20) output from the output means (13), wherein the output means is arranged for outputting of the map (20) by displaying the map (20) on a display.

2. The mobile robot (1) according to claim 1, wherein the mobile robot (1) is arranged to store the representation of the at least one object (19) around the mobile robot (1) in a fixed system of coordinates.

3. The mobile robot (1) according to claim 1 or 2, wherein the mobile robot (1) is arranged to store at least one of the representations of the at least one object (19) around the mobile robot (1) with data on the relation to an earlier stored represention (21, 24, 26) of an object.

4. The mobile robot (1) according to claim 1, 2 or 3, wherein the mobile robot (1), when it returns to a previously visited position, is arranged to adjust the representation (21, 24, 26) of a detected object to an earlier stored representation (21, 24, 26) of the object (19).

5. The mobile robot (1) according to any one of the preceding claims, wherein the editing means (22) is selected from the group comprising a keyboard, a mouse, a computer screen, a touch sensitive screen and a joystick.

6. The mobile robot (1) according to any one of the preceding claims, wherein the output means (13) is a display arranged on the mobile robot (1).

7. The mobile robot (1) according to any one of the preceding claims, wherein the mobile robot (1) is arranged to store a blueprint (27) in the storage means (7) and to output the blueprint (27) simultaneously with the output of the map (20) on the output means (13).

8. The mobile robot (1) according to claim 6 and 7, wherein the mobile robot (1) is arranged to scale the blueprint (27) to fit the map (20).

9. The mobile robot (1) according to any one of the preceding claims, wherein the mobile robot (1) comprises wheels (2, 3).

10. The mobile robot (1) according to claim 9, wherein the means (9) to detect the movement of the mobile robot (1) is arranged to measure the movement of at least one of the wheels (2, 3).

11. The mobile robot (1) according to any one of the preceding claims, wherein the means (9) to detect movement of the mobile robot (1) is arranged to measure a change in distance between the mobile robot (1) and an object.

12. The mobile robot (1) according to any one of the preceding claims, wherein the storage means (7) comprise an electronic memory.

13. The mobile robot (1) according to any one of the preceding claims, wherein the detector means (10) is arranged to detect the distance and the direction to the object (19).

14. The mobile robot (1) according to any one of the preceding claims, wherein the detector means (10) comprises a radar (12).

15. The mobile robot according to any one of the preceding claims, wherein the detector means (10) comprises a laser based distance measuring device (11).

16. The mobile robot according to any one of the preceding claims, wherein the detector means (10) comprises a camera.

17. The mobile robot (1) according to any one of the preceding claims, wherein the mobile robot (1) is arranged to store information on visited positions in relation to representations of detected objects (19).

18. The mobile robot according to any one of the preceding claims, wherein the mobile robot (1) is arranged to determine whether a detected object is static or moving.

19. The mobile robot according to claim 18, wherein the mobile robot (1) is arranged to store a representation (21, 24, 26) of only stativ objects.

20. A method for building a map (20) of an environment in which a mobile robot (1) is to operate, comprising the steps of moving the mobile robot (1) in the environment, detecting the movement of the mobile robot (1), detecting objects (19) around the mobile robot (1), storing a representation (21, 24, 26) of the detected objects (19) in a map (20) in a storage means (7) based on the detected movement and outputting the map (20) on the output means (13), **characterized in that** the method comprises the steps of receiving an instruction for editing the map (20) during building of the map (20) and editing the map (20), based on the instruction, during building of the map (20), wherein the outputting of the map (20) is performed by displaying the map (20) on a display.

## Patentansprüche

1. Mobiler Roboter (1), der zum Betrieb in einer Umgebung ausgebildet ist, umfassend eine Speichervorrichtung (7) zum Speichern von Abbildungen (21, 24, 26) der Umgebung, eine Vorrichtung (9) zum Erfassen einer Bewegung des mobilen Roboters (1), eine Erfassungsvorrichtung (10) zum Erfassen von Objekten um den mobilen Roboter (1) herum, eine Steuervorrichtung (8) zum Speichern einer Abbildung (21, 24, 26) von mindestens einem erfassten Objekt in einer Karte (20) in der Speichervorrichtung (7) sowie eine Ausgabevorrichtung (13) zum Ausgeben der Karte (20) aus der Speichervorrichtung (7), wobei der mobile Roboter (1) in einem Einrichtungsmodus ausgebildet ist, Abbildungen erfasster Objekte (19) in der Speichervorrichtung (7) aufgrund der erfassten Bewegung zu speichern, um die Karte (20) zu erzeugen, und wobei der mobile Roboter (1) in einem Aufrechterhaltungsmodus ausgebildet ist, sich unter Verwendung der im Einrichtungsmodus erzeugten Karte (20) in der Umgebung zu bewegen, **dadurch gekennzeichnet, dass**
der mobile Roboter (1) eine Editiervorrichtung umfasst, um aufgrund einer empfangenen Anweisung im Einrichtungsmodus die Karte (20) in der Speichervorrichtung (7) aufgrund der aus der Ausgabevorrichtung (13) ausgegebenen Karte (20) zu editieren, wobei die Ausgabevorrichtung zum Ausgeben der Karte (20) durch Anzeigen der Karte (20) auf einem Display ausgebildet ist.

2. Mobiler Roboter (1) nach Anspruch 1, wobei der mobile Roboter (1) zum Speichern der Abbildung des mindestens einen Objekts (19) um den mobilen Roboter (1) herum in einem festen Koordinatensystem ausgebildet ist.

3. Mobiler Roboter (1) nach Anspruch 1 oder 2, wobei der mobile Roboter (1) zum Speichern mindestens einer der Abbildungen des mindestens einen Objekts (19) um den mobilen Roboter (1) herum mit Daten bezogen auf eine zuvor gespeicherte Abbildung (21, 24, 26) eines Objekts ausgebildet ist.

4. Mobiler Roboter (1) nach Anspruch 1, 2 oder 3, wobei der mobile Roboter (1), wenn er an eine zuvor besuchte Position zurückkehrt, zum Anpassen der Abbildung (21, 24, 26) eines erfassten Objekts an eine zuvor gespeicherte Abbildung (21, 24, 26) des Objekts (19) ausgebildet ist.

5. Mobiler Roboter (1) nach einem der vorangegangenen Ansprüche, wobei die Editiervorrichtung (22) ausgewählt ist aus der Gruppe umfassend eine Tastatur, eine Maus, einen Computerbildschirm, ein Touchscreen und ein Joystick.

6. Mobiler Roboter (1) nach einem der vorangegangenen Ansprüche, wobei die Ausgabevorrichtung (13) ein an dem mobilen Roboter (1) vorgesehenes Display ist.

7. Mobiler Roboter (1) nach einem der vorangegangenen Ansprüche, wobei der mobile Roboter (1) zum Speichern einer Blaupause (27) in der Speichervorrichtung (7) und zum Ausgeben der Blaupause (27) gleichzeitig mit der Ausgabe der Karte (20) an der Ausgabevorrichtung (13) ausgebildet ist.

8. Mobiler Roboter (1) nach Anspruch 6 und 7, wobei der mobile Roboter (1) zum Skalieren der Blaupause (27) zur Anpassung der Karte (20) ausgebildet ist.

9. Mobiler Roboter (1) nach einem der vorangegangenen Ansprüche, wobei der mobile Roboter (1) Räder (2, 3) umfasst.

10. Mobiler Roboter (1) nach Anspruch 9, wobei die Vorrichtung (9) zum Erfassen der Bewegung des mobilen Roboters (1) zum Messen der Bewegung mindestens eines der Räder (2, 3) ausgebildet ist.

11. Mobiler Roboter (1) nach einem der vorangegangenen Ansprüche, wobei die Vorrichtung (9) zum Erfassen der Bewegung des mobilen Roboters (1) zum Messen einer Abstandsänderung zwischen dem mobilen Roboter (1) und einem Objekt ausgebildet ist.

12. Mobiler Roboter (1) nach einem der vorangegangenen Ansprüche, wobei die Speichervorrichtungen (7) einen elektronischen Speicher umfassen.

13. Mobiler Roboter (1) nach einem der vorangegangenen Ansprüche, wobei die Erfassungsvorrichtung (10) zum Erfassen des Abstands und der Richtung des Objekts (19) ausgebildet ist.

14. Mobiler Roboter (1) nach einem der vorangegangenen Ansprüche, wobei die Erfassungsvorrichtung (10) ein Radar (12) umfasst.

15. Mobiler Roboter (1) nach einem der vorangegangenen Ansprüche, wobei die Erfassungsvorrichtung (10) eine laser-basierte Abstandsmesseinrichtung (11) umfasst.

16. Mobiler Roboter (1) nach einem der vorangegangenen Ansprüche, wobei die Erfassungsvorrichtung (10) eine Kamera umfasst.

17. Mobiler Roboter (1) nach einem der vorangegangenen Ansprüche, wobei der mobile Roboter (1) zum Speichern von Informationen über besuchte Positionen bezogen auf Abbildungen erfasster Objekte (19) ausgebildet ist.

18. Mobiler Roboter (1) nach einem der vorangegangenen Ansprüche, wobei der mobile Roboter (1) zum Bestimmen, ob ein erfasstes Objekt statisch ist oder sich bewegt, ausgebildet ist.

19. Mobiler Roboter (1) nach Anspruch 18, wobei der mobile Roboter (1) zum Speichern einer Abbildung (21, 24, 26) nur von statischen Objekten ausgebildet ist.

20. Verfahren zum Erzeugen einer Karte (20) einer Umgebung, in welcher der mobile Roboter (1) betrieben werden soll, umfassend die Schritte des Bewegens des mobilen Roboters (1) in der Umgebung, Erfassen der Bewegung des mobilen Roboters (1), Erfassen von Objekten (19) um den mobilen Roboter (1) herum, Speichern einer Abbildung (21, 24, 26) der erfassten Objekte (19) in einer Karte (20) in einer Speichervorrichtung (7) aufgrund der erfassten Bewegung und Ausgeben der Karte (20) an der Ausgabevorrichtung (13),
**dadurch gekennzeichnet, dass**
das Verfahren die Schritte des Empfangens einer Anweisung zum Editieren der Karte (20) während der Erzeugung der Karte (20) und des Editierens der Karte (20) aufgrund der Anweisung während des Erzeugens der Karte (20) umfasst, wobei die Ausgabe der Karte (20) durch das Anzeigen der Karte (20) auf einem Display erfolgt.

## Revendications

1. Robot mobile (1) agencé pour fonctionner dans un environnement et comprenant un moyen de stockage (7) pour stocker des représentations (21, 24, 26) de l'environnement, un moyen (9) pour détecter un mouvement du robot mobile (1), un moyen de détection (10) pour détecter des objets autour du robot mobile (1), un moyen de commande (8) pour stocker une représentation (21, 24, 26) d'au moins un objet détecté sur une carte (20) dans le moyen de stockage (7), et un moyen de sortie (13) pour délivrer en sortie la carte (20) à partir du moyen de stockage (7), dans lequel le robot mobile (1) dans un mode d'installation est agencé pour stocker des représentations d'objets détectés (19) dans le moyen de stockage (7) d'après le mouvement détecté afin de créer la carte (20), et dans lequel le robot mobile (1) dans un mode de maintenance est agencé pour se déplacer dans l'environnement en utilisant la carte (20) créée dans le mode d'installation, **caractérisé en ce que** le robot mobile (1) comprend un moyen d'édition pour éditer, d'après une instruction reçue dans le mode d'installation, la carte (20) dans le moyen de stockage (7) d'après la carte (20) délivrée en sortie par le moyen de sortie (13), dans lequel le moyen de sortie est agencé pour délivrer en sortie la carte (20) en affichant la carte (20) sur un afficheur.

2. Robot mobile (1) selon la revendication 1, dans lequel le robot mobile (1) est agencé pour stocker la représentation du au moins un objet (19) autour du robot mobile (1) dans un système de coordonnées fixe.

3. Robot mobile (1) selon la revendication 1 ou 2, dans lequel le robot mobile (1) est agencé pour stocker au moins une des représentations du au moins un objet (19) autour du robot mobile (1) avec des données en relation avec une représentation (21, 24, 26) stockée antérieure d'un objet.

4. Robot mobile (1) selon la revendication 1, 2 ou 3, dans lequel le robot mobile (1), lorsqu'il revient à une position visitée précédemment, est agencé pour ajuster la représentation (21, 24, 26) d'un objet détecté à une représentation (21, 24, 26) stockée antérieure de l'objet (19).

5. Robot mobile (1) selon l'une quelconque des revendications précédentes, dans lequel le moyen d'édition (22) est choisi dans le groupe comprenant un clavier, une souris, un écran d'ordinateur, un écran tactile et une manette de commande.

6. Robot mobile (1) selon l'une quelconque des revendications précédentes, dans lequel le moyen de sortie (13) est un afficheur agencé sur le robot mobile (1).

7. Robot mobile (1) selon l'une quelconque des revendications précédentes, dans lequel le robot mobile (1) est agencé pour stocker un plan (27) dans le moyen de stockage (7) et pour délivrer en sortie le plan (27) simultanément à la sortie de la carte (20) sur le moyen de sortie (13).

8. Robot mobile (1) selon les revendications 6 et 7, dans lequel le robot mobile (1) est agencé pour adapter l'échelle du plan (27) à la carte (20).

9. Robot mobile (1) selon l'une quelconque des revendications précédentes, dans lequel le robot mobile (1) comprend des roues (2, 3).

10. Robot mobile (1) selon la revendication 9, dans lequel le moyen (9) pour détecter le mouvement du robot mobile (1) est agencé pour mesurer le mouvement d'au moins une des roues (2, 3).

11. Robot mobile (1) selon l'une quelconque des revendications précédentes, dans lequel le moyen (9) pour détecter un mouvement du robot mobile (1) est agencé pour mesurer un changement de distance entre le robot mobile (1) et un objet.

12. Robot mobile (1) selon l'une quelconque des revendications précédentes, dans lequel le moyen de stockage (7) comprend une mémoire électronique.

13. Robot mobile (1) selon l'une quelconque des revendications précédentes, dans lequel le moyen de détection (10) est agencé pour détecter la distance et la direction jusqu'à l'objet (19).

14. Robot mobile (1) selon l'une quelconque des revendications précédentes, dans lequel le moyen de détection (10) comprend un radar (12).

15. Robot mobile selon l'une quelconque des revendications précédentes, dans lequel le moyen de détection (10) comprend un dispositif de mesure de distance à laser (11).

16. Robot mobile selon l'une quelconque des revendications précédentes, dans lequel le moyen de détection (10) comprend une caméra.

17. Robot mobile (1) selon l'une quelconque des revendications précédentes, dans lequel le robot mobile (1) est agencé pour stocker des informations sur les positions visitées en rapport avec des représentations d'objets (19) détectés.

18. Robot mobile selon l'une quelconque des revendications précédentes, dans lequel le robot mobile (1) est agencé pour déterminer si un objet détecté est statique ou en mouvement.

19. Robot mobile selon la revendication 18, dans lequel le robot mobile (1) est agencé pour stocker une représentation (21, 24, 26) d'objets statiques uniquement.

20. Procédé de construction d'une carte (20) d'un environnement dans lequel doit fonctionner un robot mobile (1), comprenant les étapes consistant à déplacer le robot mobile (1) dans l'environnement, détecter le mouvement du robot mobile (1), détecter des objets (19) autour du robot mobile (1), stocker une représentation (21, 24, 26) des objets détectés (19) sur une carte (20) dans un moyen de stockage (7) d'après le mouvement détecté et délivrer en sortie la carte (20) sur le moyen de sortie (13), **caractérisé en ce que** le procédé comprend les étapes consistant à recevoir une instruction pour éditer la carte (20) pendant la construction de la carte (20) et éditer la carte (20), d'après l'instruction, pendant la construction de la carte (20), dans lequel la sortie de la carte (20) est réalisée par affichage de la carte (20) sur un afficheur.
